# NEUE EUROPÄISCHE PATENTSCHRIFT

(11) **EP 2 068 416 B2**
(45) Veröffentlichungstag und Bekanntmachung des Hinweises auf die Entscheidung über den Einspruch: **15.05.2019**
(45) Hinweis auf die Patenterteilung: 20.04.2011
(21) Anmeldenummer: 08169057.0
(22) Anmeldetag: 13.11.2008
(51) Int. Cl.: H02J 3/18, H02P 21/00

(54) **Vorsteuerung eines Voltage Source Converters**
Advance control for a voltage source converter
Précommande d'un convertisseur de source de tension

(30) Priorität: 05.12.2007 DE 102007058749
(43) Veröffentlichungstag der Anmeldung: 10.06.2009
(73) Patentinhaber: Siemens Aktiengesellschaft, 80333 München (DE)
(72) Erfinder: Rittiger, Jürgen, 91074 Herzogenaurach (DE)

(56) Entgegenhaltungen:
- EP-A- 0 884 834
- DE-A1- 10 206 191
- DE-A1- 10 336 068
- DE-C1- 19 523 565
- Dannehl J et al: "PWM rectifier with LCL-filter using different current control structures", 2007 European Conference on Power Electronics and Applications 02-05 Sept.2007, 2 September 2007 (2007-09-02), pages 1-10, XP055045412,
- Vladimir Blasko et al: "A Novel Control to Actively Damp Resonance in Input LC Filter of a Three-Phase Voltage Source Converter", IEEE TRANSACTIONS ON INDUSTRY APPLICATIONS, vol. 33, no. 2, 1 April 1997 (1997-04-01), XP055139258,
- JANNING J et al: "HIGHLY DYNAMIC VECTOR CONTROL WITH ADAPTIVE LINE HARMONIC ADJUSTMENT FOR HIGH POWER VOLTAGE SOURCE CONVERTERS", ELECTRICAL ENGINEERING, vol. 81, no. 5, 1 December 1998 (1998-12-01), pages 309-315, XP009034268,
- EPE 2007 Aalborg final programme, 12th European conference on power electronics and applications, 2-5 Sept.2007, Aalborg, Denmark

## Beschreibung

Die Erfindung betrifft ein Verfahren zum Regeln eines an einen Gleichspannungskreis und an Phasen eines Wechselspannungsnetzes angeschlossenen Umrichters mit steuerbaren Leistungshalbleitern, bei dem einer Regelungseinheit Sollwerte vorgegeben werden, Istwerte wechselspannungsseitig des Umrichters mit Phasenmesssensoren erfasst und der Regelungseinheit zugeführt werden, die Regelungseinheit die Istwerte oder eine aus den Istwerten abgeleitete Größe mit wenigstens einem der Sollwerte vergleicht, ein Regler in Abhängigkeit des Vergleichs eine Führungsgröße erzeugt und an eine Zündeinheit überträgt und die Zündeinheit die Leistungshalbleiter so ansteuert, dass die Istwerte oder eine aus den Istwerten abgeleitete Größe wenigstens einem Sollwert entspricht, wobei eine Vorsteuereinheit auf der Grundlage von Parametern wenigstens eine Sprungführungsgröße berechnet und jede Sprungführungsgröße an die Zündeinheit übertragen wird, und die Ansteuerung der Leistungshalbleiter in einem Bedarfsfall in Abhängigkeit wenigstens einer der Sprungführungsgrößen erfolgt.

Ein solches Verfahren ist aus der EP 0 884 834 A1 bereits bekannt. Dort ist eine Regelung für eine Synchronmaschine mit trapezförmiger elektromotorischer Kraft beschrieben, die eine Vorsteuereinheit aufweist, die bei sich sprungartig ändernden Einflussgrößen Wirkung entfaltet. Die Vorsteuergröße berechnet dann Sprungführungsgrößen in Abhängigkeit von Parametern der Synchronmaschine.

Im Bereich der Hochspannungsgleichstromübertragung eingesetzte vorbekannte Umrichter verfügen über eine Regelungseinheit, die in Abhängigkeit vorgegebener Sollwerte eine Führungsgröße, wie beispielsweise eine an den Wechselspannungsanschlüssen des jeweiligen Umrichters einzustellende Spannung, erzeugt. Die ausgangsseitig an der Regelungseinheit bereitgestellte Führungsgröße wird schließlich einer Zündeinheit zugeführt, welche die Leistungshalbleiter so ansteuert, dass beispielsweise an den Wechselspannungsanschlüssen des Umrichters die gewünschte Wechselspannung erzeugt wird. In der Regel vergleicht die Regeleinheit wenigstens einen Messwert, oder mit anderen Worten Istwert, mit einer vorgegebenen Sollgröße, wie beispielsweise einer vorgegebenen Sollblindleistung und/oder Sollwirkleistung. Die vorgegebene Sollblindleistung und Sollwirkleistung werden beispielsweise mit einer vom Umrichter tatsächlich übertragenen Istblindleistung und Istwirkleistung verglichen. Ein Regler der Regeleinheit erzeugt in Abhängigkeit dieses Vergleichs eine Führungsgröße, also in diesem Falle eine wechselseitig am Umrichter einzustellende Wechselspannung, so dass Soll- und Istwerte möglichst genau miteinander überstimmen. Als Regler eigenen sich beispielsweise ein marktüblicher Proportionalintegralregler.

Dem Verfahren gemäß dem Stand der Technik haftet der Nachteil an, dass es bei einem Übergang von einem alten zu einem neuen stationären Betriebspunkt, beispielsweise in Folge eines Sollwertesprunges, zu unerwünschten Regelverzögerungen kommen kann. Die Regelverzögerungen sind von den Zeitkonstanten des eingesetzten Reglers und der Zeitkonstante der Regelstrecke abhängig.

Aufgabe der Erfindung ist es, ein Verfahren der eingangs genannten Art bereitzustellen, mit dem ein Umrichter schnell und sicher in einen neuen stationären Betriebspunkt überführt werden kann.

Die Erfindung löst diese Aufgabe dadurch, dass die Vorsteuereinheit die Impedanz (R+jX) eines Transformators als Parameter für die Berechnung der Sprungführungsgrößen U_{VSCd}, U_{VSCq} verwendet, wobei der Transformator zwischen den Umrichter und das Wechselspanungsnetz geschaltet ist und die Vorsteuereinheit die Übertragung der Führungsgrößen U'_{VSCd}, U'_{VSCq} von der Regelungseinheit an die Zündeinheit im Bedarfsfall unterbricht und stattdessen jede Sprungführungsgröße U_{VSCd}, U_{VSCq} an die Zündeinheit überträgt.
Erfindungsgemäß verwendet die Vorsteuereinheit die Impedanz eines Transformators als Parameter für die Berechnung der Sprungführungsgröße, wobei der Transformator zwischen Umrichter und Wechselspannungsnetz geschaltet ist. Die Impedanz des Transformators ist in der Regel eine komplexe Größe, so dass zwei Parameter für die Berechnung der Sprungführungsgrößen erforderlich sind.

Erfindungsgemäß ist eine Vorsteuereinheit vorgesehen, die im Bedarfsfall eine Eingangsgröße für die Zündeinheit auf Grundlage wenigstens einer der Sollwerte der Regelungseinheit und der Transformatorparameter berechnet. Der Ausgang der Regelungseinheit ist im besagten Bedarfsfall zumindest nicht mehr maßgeblich für die Ansteuerung der Leistungshalbleiter des Umrichters. Dies ist insbesondere im Bedarfsfall vorteilhaft, wobei der Bedarfsfall beispielsweise bei einer sprunghaften Änderung der vorgegebenen Sollwerte eintritt. Gemäß dem Stand der Technik wird in einem solchen Fall die Regelungseinheit eine große Abweichung der Istwerte von den sprunghaft geänderten Sollwerten feststellen. Aufgrund der Zeitkonstanten der Regeleinheit einerseits und der Regelstrecke andererseits wird der neue stationäre Betriebspunkt bei der üblichen Regelung nur mühsam erreicht. Erfindungsgemäß wird daher das Eingangssignal der Zündeinheit mit Hilfe eines der vorgegebenen Sollwerte oder mehrerer vorgegebener Sollwerte unter Gewinnung einer Sprungführungsgröße zumindest bis zu einem vorbestimmten Anteil berechnet. Die Berechnung erfolgt mit Hilfe der Impedanz des Transformators. Die berechnete Sprungführungsgröße als Ausgangssignal der Vorsteuereinheit wird an Stelle des Ausgangssignals der Regelungseinheit an den Eingang der Zündeinheit gelegt, so dass die Zündeinheit aufgrund der Sprungführungsgröße die Ansteuerung der Leistungshalbleiter des Umrichters durchführt. Durch die Vorsteuereinheit wird der Übergang von einem stationären Betriebspunkt zu einem anderen stationären Betriebspunkt beschleunigt und die Regeldynamik auf diese Weise verbessert.

Zweckmäßigerweise ist die Regelungseinheit mit Strommesssensoren verbunden, die wechselstromseitig des Umrichters fließende Phasenströme unter Gewinnung von Phasenstrommesswerten erfassen und die Phasenstrommesswerte als Istwerte der Regelungseinheit bereitstellen. Gemäß dieser vorteilhaften Weiterentwicklung der Erfindung stellt die Regelungseinheit auf eine Stromregelung ab, wobei die Phasenstrommesswerte wechselstromseitig des Umrichters als Istwerte erfasst werden.

Vorteilhafterweise verfügt die Regelungseinheit über Transformationseinheiten zum Umrechnen von Phasenmesswerten in Zeigermesswerte und über Rücktransformationseinheiten zum Umrechnen von Zeigermesswerten in Phasenmesswerte. Solche Umrecheneinheiten von beispielsweise dreiphasigen Wechselstrom- oder Wechselspannungswerten in zweidimensionale Zeigergrößen sind dem Fachmann bekannt, so dass an dieser Stelle hierauf nicht genauer eingegangen zu werden braucht. Ein detailliertes Ausführungsbeispiel wird ist in der Figurenbeschreibung angegeben.

Vorteilhafterweise verfügt die Regelungseinheit über eine Umrecheneinheit zum Umrechnen vorgegebener Sollwerte in einen Sollwirkstrom I_{dSoll} und einen Sollblindstrom I_{qSoll}. Als vorgegebene Sollwerte dienen beispielsweise eine Sollwirkleistung P_{Soll} und eine Sollblindleistung Q_{Soll}. In diesem Zusammenhang sei angemerkt, dass lediglich Umrichter mit abschaltbaren Leistungshalbleitern, die an einen Gleichspannungszwischenkreis angeschlossen sind, also so genannte "Voltage Source Converter", eine unabhängige Einstellung von Wirkleistung und Blindleistung ermöglichen. Bei nicht abschaltbaren Leistungshalbleitern, wie beispielsweise Thyristoren, ist hingegen keine unabhängige Einstellung dieser Größen gegeben. Bei dem erfindungsgemäßen Umrichter handelt es sich daher vorteilhafterweise um einen so genannten Voltage Source Converter, also einem Umrichter mit abschaltbaren Leistungshalbleitern, die an einen Gleichspannungszwischenkreis angeschlossen sind. Dabei ist jedem abschaltbaren Leistungshalbleiter beispielsweise eine Freilaufdiode parallel geschaltet. Die Topologie des Umrichters ist im Rahmen der Erfindung grundsätzlich beliebig. So sind im Rahmen der Erfindung beispielsweise ZweiPunkt- oder Mehr-Punkt-Umrichter vorgesehen und insbesondere so genannte Multi-Level-Umrichter.

Zweckmäßigerweise ist die Vorsteuereinheit ausgangsseitig mit der Regelungseinheit verbunden. Die Vorsteuereinheit kann auf diese Weise den Ausgang der Regelungseinheit beeinflussen, blockieren oder dergleichen.

Gemäß einer diesbezüglichen Weiterentwicklung wird der Vorsteuereinheit ein Bedarfsfall, beispielsweise eine sprunghafte Veränderung wenigstens eines der Sollwerte, eingangsseitig über ein Kommunikationssignal mitgeteilt. Abweichend hiervon stellt die Vorsteuereinheit den Bedarfsfall selbstständig fest. Die Vorsteuereinheit, die mit der Regelungseinheit verbunden ist, weist die Regelungseinheit erfindungsgemäß an, die Übertragung von Führungsgrößen an die Vorsteuereinheit zu unterbrechen. Stattdessen überträgt die Vorsteuereinheit ihre Sprungführungsgrößen an die Zündeinheit, so dass die Steuerung der Leistungshalbleiter des Umrichters allein in Abhängigkeit der Vorsteuereinheit erfolgt. Abweichend davon ist es jedoch auch möglich, dass aufgrund eines Signals der Vorsteuereinheit an die Regelungseinheit die Ausgangswerte der Regelungseinheit reduziert oder auf einen bestimmten Wert begrenzt werden, wobei die Vorsteuereinheit, dem entsprechende Sprungführungsgrößen berechnet, die den Ausgangssignalen der Regelungseinheit aufgeschaltet, also zu diesen hinzuaddiert werden.

In diesem Zusammenhang ist es selbstverständlich auch möglich, dass eine Auswahleinheit vorgesehen ist, die eingangsseitig sowohl mit der Vorsteuereinheit als auch mit der Regelungseinheit verbunden ist, wobei die oder der Ausgang der Auswahleinheit mit der Zündeinheit verbunden ist. Die Auswahleinheit ist so eingerichtet, dass diese einen Bedarfsfall entweder selbstständig feststellt oder ihr der Bedarfsfall von externer Stelle mitgeteilt wird. Im letzteren Fall ist die Auswahleinheit eingangsseitig von außen ansteuerbar. Wird der Bedarfsfall festgestellt oder entsprechend mitgeteilt, leitet die Auswahleinheit erfindungsgemäß nicht mehr wie im Normalbetrieb die Ausgangssignale der Regelungseinheit an die Zündeinheit weiter, sondern stattdessen die Ausgangssignale der Vorsteuereinheit.

Bei einer vorteilhaften Weiterentwicklung des erfindungsgemäßen Verfahrens werden die Sollwerte von einer Umrecheneinheit ausgehend von Ursprungssollwerten berechnet. Hier drauf wurde bereits im Zusammenhang mit den Ausgestaltungen der erfindungsgemäßen Vorrichtung eingegangen. Nur beispielsweise soll daher an dieser Stelle noch einmal die Umrechnung einer Sollwirkleistung und einer Sollblindleistung in einen Sollwirkstrom und in einen Sollblindstrom erwähnt werden.

Zweckmäßigerweise bestimmt die Vorsteuereinheit den Bedarfsfall in Abhängigkeit der Änderung der vorgegebenen Sollwerte. Gemäß dieser zweckmäßigen Ausgestaltung der Erfindung werden die Sollwerte sowohl der Regelungseinheit als auch der Vorsteuereinheit zugeführt. Hierzu sind Regelungseinheit und Vorsteuereinheit beispielsweise mit einer übergeordneten Leitstelle verbunden, die beispielsweise mit einem Regelungstechniker oder dergleichen, besetzt ist. Wie bereits ausgeführt wurde, unterbricht die Vorsteuereinheit erfindungsgemäß die Übertragung der Führungsgröße von der Regelungseinheit an die Zündeinheit im Bedarfsfall und sendet stattdessen Sprungführungsgrößen an die Zündeinheit.

Gemäß einer bevorzugten Ausgestaltung des Verfahrens berechnet die Vorsteuereinheit eine an den Wechselspannungsanschlüssen des Umrichters gewünschte mehrphasige Wechselspannung als Sprungführungsgröße. In diesem Zusammenhang sei darauf hingewiesen, dass bei einer bevorzugten Ausgestaltung auch die Ausgangsgrößen der Regelungseinheit einer vom Umrichter zu erzeugenden mehrphasige Wechselspannung entsprechen. Die Zündeinheit setzt die gewünschten Wechselspannungen in entsprechende Steuersignale um - beispielsweise in Form einer Pulsweitenmodulation -, so dass an dem Umrichter, dessen Leistungshalbleiter mit der Zündeinheit verbunden sind, wechselspannungsseitig die gewünschte Wechselspannung erzeugt wird.

Gemäß einer weiteren vorteilhaften Ausgestaltung der Erfindung berechnet die Vorsteuereinheit die Wechselspannung zunächst als zweidimensionale Zeigergrößen U_{VSCd} und U_{VSCq} nach U_{VSCd} = U_{Nd} + R * I_{dsoll} - X * I_{qsoll} und U_{VSCq} = X * I_{dsoll} + R * I_{qsoll}, wobei U_{VSCd} der am Umrichter wechselspannungsseitig abfallende Spannungsanteil ist, der mit der Wechselspannung des Wechselspannungsnetzes U_{NS} in Phase ist, und U_{VSCq} der wechselseitig des Umrichters abfallende Spannungsanteil ist, der zur Wechselspannung des Wechselspannungsnetzes U_{NS} um 90° phasenverschoben ist, wobei R der Realteil der Impedanz eines zwischen Umrichter und Wechselspannungsnetz angeordneten Transformators, X der Imaginärteil der Impedanz des besagten Transformators, I_{dsoll} der Sollstrom in Phase mit U_{VSCd} und I_{qsoll} der Strom in Phase mit U_{VSCq} sind.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen, und wobei
- Figur 1: ein Ausführungsbeispiel einer wechselstromseitigen Anbindung eines Umrichters an ein Wechselspannungsnetz schematisch verdeutlicht,
- Figur 2: eine schematische Zeigerdarstellung und
- Figur 3: ein Ausführungsbeispiel des erfindungsgemäßen Verfahrens schematisch zeigen.

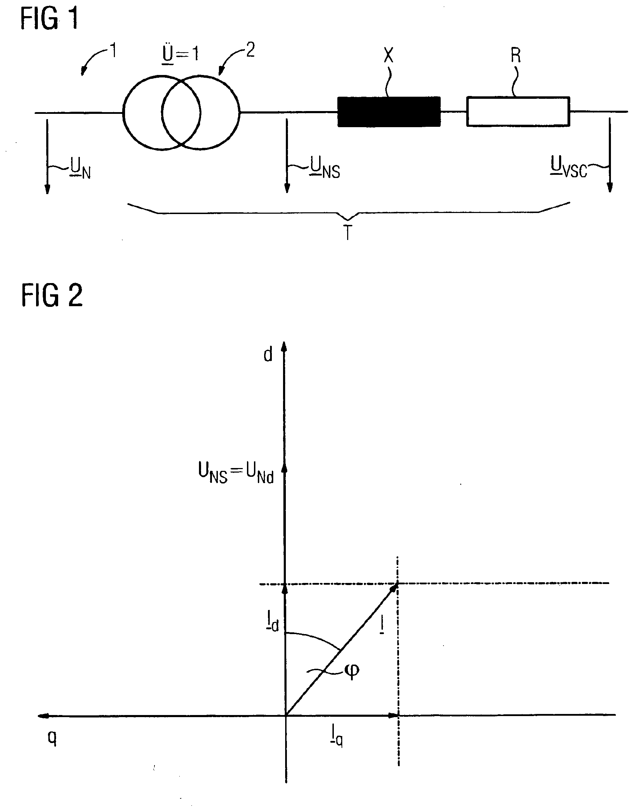

Figur 1 zeigt einen wechselstromseitigen Anschluss eines figürlich nicht dargestellten Umrichters an ein Wechselspannungsnetz 1, das von dem Umrichter mit einer Spannung versorgt werden soll. Aus Gründen der Übersichtlichkeit wurde in Figur 1 nur eine Phase verdeutlicht, wobei jedoch hiermit darauf hingewiesen wird, dass es sich bei dem gezeigten Ausführungsbeispiel um ein dreiphasiges Wechselspannungsnetz 1 mit dreiphasigen Verbindungsleitungen zum dreipoligen Wechselspannungsanschluss des Umrichters handelt. Das Wechselspannungsnetz 1 mit der Wechselspannung U_{N} ist über einen Transformator 2, der ein idealisiertes Übertragungsverhältnis von 1 aufweist, mit dem Umrichter verbunden. Berücksichtigt man nur das Übertragungsverhältnis, fällt an der Sekundärwicklung des Transformators 2 die Spannung U_{NS} ab. Der Transformator 2 weist die Transformatorparameter X und R auf, wobei X dem komplexen Anteil der Transformatorimpedanz und R dem reellen Anteil der Transformatorimpedanz entsprechen. Unter Berücksichtigung der Transformatorparameter X und R ergibt sich die wechselspannungsseitige Umrichterspannung U_{VSC}.

Figur 2 zeigt die sich einstellenden Verhältnisse zwischen Strom und Spannung in einem als solchen bekannten Zeigermodell. Hierbei werden lediglich die auftretenden Amplituden sowie die sich einstellenden Phasendifferenzen zwischen Strom und Spannung berücksichtigt. Der Zeiger der Spannung im Wechselstromnetz U_{N} beziehungsweise U_{NS} wird dabei kollinear zur D-Achse ausgerichtet. Der sich einstellende Zeiger des Stroms I hat eine Komponente I_{d} in Richtung der Netzspannung U_{NS}, die gegenüber der Netzspannung keine Phasenverschiebung aufweist. Die Phasenverschiebung wird im Zeigermodell als Winkel verdeutlicht, der von der d-Achse und der jeweiligen Zeigergröße bezüglich des Koordinatenursprungs aufgespannt wird. Eine um 90 Grad in der Phase gegenüber U_{NS} verschobene Stromkomponente I_{q} ist kollinear zur q-Achse ausgerichtet. I_{d} wird im Folgenden als Wirkstrom und I_{q} als Blindstrom bezeichnet.

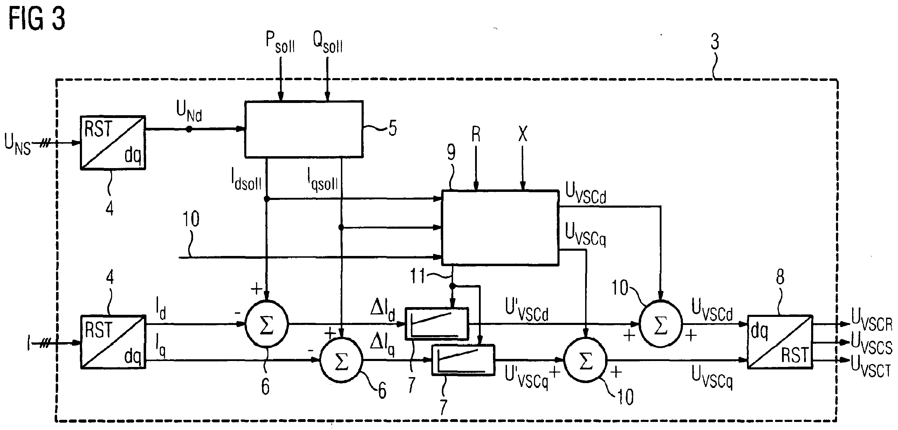

Figur 3 zeigt ein Ausführungsbeispiel des erfindungsgemäßen Verfahrens. So ist in Figur 3 eine Regelungseinheit 3 dargestellt, die ausgangsseitig für jede der drei Phasen des Wechselspannungsanschlusses des Umrichters Umrichterspannungen U_{VSCR}, U_{VSCS} und U_{VSCT} bereitstellt. Die Umrichterspannungen dienen als Führungsgröße für eine in Figur 3 figürlich nicht dargestellte Zündeinheit, die wiederum in bekannter Art und Weise mit Leistungshalbleitern, in diesem Falle IGBTs, des Umrichters verbunden ist. Die Topologie des Umrichters ist in diesem Falle beliebig auswählbar. Wesentlich ist jedoch, dass die Zündeinheit aufgrund der Umrichterspannungen solche Steuersignale für die mit ihr verbundenen Leistungshalbleiter erzeugt, dass wechselspannungsseitig am Umrichter die von der Führungsgröße vorgegebenen Umrichterspannungen U_{VSCR}, U_{VSCS} und U_{VSCT} mit hinreichender Genauigkeit abfallen. Eingangsseitig ist die Regelungseinheit 3 mit figürlich ebenfalls nicht dargestellten Messsensoren verbunden, die für jede Phase des Wechselspannungsnetzes die Istspannung U_{NS} bereitstellen. Darüber hinaus ist die Regelungseinheit 3 mit Strommesssensoren verbunden, die jeweils einen Phasenstrom in den Phasen des Wechselspannungsnetzes 1 erfassen und einen Iststrom I für jede Phase an die Regelungseinheit 3 übertragen. Sowohl die Istspannung U_{NS} als auch der Iststrom I werden von jeweils einer Transformationseinheit 4 in Zeigermesswerte überführt, wobei aus den Istspannungen U_{NS} eine Zeigergröße U_{Nd} und aus den Iststromwerten ein Istwirkstrom I_{d} und ein Istblindstrom I_{q} erzeugt werden.

Ferner ist eine Umrecheneinheit 5 vorgesehen, die auf an sich bekannte Art und Weise aus einem vorgegebenen Sollwert für die Wirkleistung P_{Soll} und aus einem Sollwert für die Blindleistung Q_{Soll} einen Sollwirkstrom I_{dSoll} und einen Sollblindstrom I_{qSoll} berechnet. Sollwirkstrom und Sollblindstrom werden jeweils an einen Differenzbildner 6 übertragen, der die Differenz zwischen Sollwirkstrom und Istwirkstrom ΔI_{d} beziehungsweise die Differenz zwischen Sollblindstrom und Istblindstrom ΔI_{q} bildet, wobei die Differenzen ΔI_{d}, ΔI_{q} jeweils einem Regler 7, hier einem PI-Regler, zugeführt werden, der ausgangsseitig eine Führungsgröße im Zeigermodell U'_{VSCd} und U'_{VSCq} bereitstellt. Die Führungsgrößen U'_{VSCd} und U'_{VSCq} werden durch eine Rücktransformationseinheit 8 in die besagten Umrichterspannungen U_{VSCR}, U_{VSCS} und U_{VSCT} als Führungsgröße für die Zündeinheit überführt.

In Figur 3 ist ferner eine Vorsteuereinheit 9 erkennbar, die eingangsseitig mit dem Sollwirkstrom I_{dSoll} und dem Sollblindstrom I_{dqSoll} sowie mit den Transformatorparametern X, R versorgt ist. Ausgehend von den genannten Eingangsgrößen berechnet die Vorsteuereinheit 9 Sprungführungsgrößen U_{VSCd} und U_{VSCq}. Dies erfolgt jedoch nur in einem Bedarfsfall, der sich im besagten Ausführungsbeispiel bei einer so großen Veränderungen der Sollwerte P_{Soll} und Q_{Soll} ergibt, dass die Differenz zwischen den alten Sollwerten und den neuen Sollwerten einen bestimmten Schwellenwert überschreitet. Dies wird der Vorsteuereinheit 9 beispielsweise durch ein Auslösesignal 10 beispielsweise von einer figürlich nicht dargestellten Leitstelle aus mitgeteilt. Anschließend berechnet die Vorsteuereinheit 9 die Sprungführungsgrößen U_{VSCd} und U_{VSCq} auf eine weiter unten beschriebene Art und Weise, wobei gleichzeitig der Regler 7 über eine Signalmitteilung 11 angesprochen wird, die Führungsgröße U'_{VSCd} beziehungsweise U'_{VSCq} auf null zu setzen. Die Summenbildner 10 bilden anschließend die Summe aus den Sprungführungsgrößen und den Führungsgrößen, so dass sich im besagten Bedarfsfall am Ausgang der Summierer 10 die Sprungführungsgröße U_{VSCd} und U_{VSCq} ergeben. Hieraus werden dann die dreiphasigen Umrichterspannungen U_{VSCR}, U_{VSCS} und U_{VSCT} berechnet. Durch die so berechneten Umrichterspannungen verbessert sich die Dynamik der Regelung des Umrichters bei einem Übergang des stationären Betriebspunktes.

Im Folgenden wird die Berechnung der Sprungführungsgrößen beschrieben. Im Zeigerraum ergibt sich die wechselseitig am Umrichter abfallende Umrichterspannung U_{VSCd} und U_{VSCq} gemäß U_{VSCd} = U_{Nd} + R * I_{dSoll} - X * I_{qSoll} und U_{VSCq} = X * I_{dSoll} + R * I_{qSoll}, wobei U_{VSCd} der Umrichterspannung entspricht, die in Phase mit der Netzspannung U_{NS} ist und wobei U_{VSCq} der Umrichterspannung entspricht, die bezüglich der Netzspannung U_{NS} eine Phasenverschiebung von 90 Grad aufweist. I_{dSoll} ist der Sollwirkstrom, wobei I_{qSoll} dem Sollblindstrom ist. X ist der komplexe Anteil der Impedanz des Transformators. R entspricht dem Realteil der Impedanz des Transformators 2, wie in Figur 1 verdeutlich ist.

## Patentansprüche

1. Verfahren zum Regeln eines an einen Gleichspannungskreis und an Phasen eines Wechselspannungsnetzes angeschlossenen Umrichters mit steuerbaren Leistungshalbleitern, bei dem einer Regelungseinheit (3) Sollwerte (I_{dSoll}, I_{qSoll}) vorgegeben werden, Istwerte (U_{NS}, I) wechselspannungssseitig des Umrichters mit Phasenmesssensoren erfasst und der Regelungseinheit (3) zugeführt werden, die Regelungseinheit (3) die Istwerte (U_{NS}, I) oder eine aus den Istwerten (U_{NS}, I) abgeleitete Größe mit wenigstens einem der Sollwerte (I_{dSoll}, I_{qSoll}) vergleicht, ein Regler (7) in Abhängigkeit des Vergleichs eine Führungsgröße (U'_{VSCd}, U'_{VSCq}) erzeugt und an eine Zündeinheit überträgt und die Zündeinheit die Leistungshalbleiter so ansteuert, dass die Istwerte (U_{NS}, I) oder eine aus den Istwerten (U_{NS}, I) abgeleitete Größe wenigstens einem Sollwert (I_{dSoll}, I_{qSoll}) entspricht, wobei eine Vorsteuereinheit (9) auf der Grundlage von Parametern (R,X) wenigstens eine Sprungführungsgröße berechnet und jede Sprungführungsgröße (U_{VSCd}, U_{VSCq}) an die Zündeinheit übertragen wird, und die Ansteuerung der Leistungshalbleiter in einem Bedarfsfall in Abhängigkeit wenigstens einer der Sprungführungsgrößen erfolgt,
**dadurch gekennzeichnet, dass**
die Vorsteuereinheit (9) die Impedanz (R+jX) eines Transformators (2) als Parameter für die Berechnung der Sprungführungsgrößen (U_{VSCd}, U_{VSCq}) verwendet, wobei der Transformator (2) zwischen den Umrichter und das Wechselspannungsnetz geschaltet ist und die Vorsteuereinheit (9) die Übertragung der Führungsgrößen (U'_{VSCd}, U'_{VSCq}) von der Regelungseinheit (3) an die Zündeinheit im Bedarfsfall unterbricht und stattdessen jede Sprungführungsgrößen (U_{VSCd}, U_{VSCq}) an die Zündeinheit überträgt.

2. Verfahren nach Anspruch 1,
**dadurch gekennzeichnet, dass**
die Sollwerte (I_{dSoll}, I_{qSoll}) von einer Umrecheneinheit (5) ausgehend von Ursprungssollwerten (P_{Soll}, Q_{Soll}) berechnet werden.

3. Verfahren nach einem der vorhergehenden Ansprüche,
**dadurch gekennzeichnet, dass**
die Vorsteuereinheit (9) den Bedarfsfall in Abhängigkeit der Änderung der vorgegebenen Sollwerte (I_{dSoll}, I_{qSoll}) bestimmt.

4. Verfahren nach einem der vorhergehenden Ansprüche,
**dadurch gekennzeichnet, dass**
die Vorsteuereinheit (9) eine wechselseitig an dem Umrichter gewünschte mehrphasige Wechselspannung (U_{VSCd}, U_{VSCq}) als Sprungführungsgröße berechnet.

5. Verfahren nach Anspruch 4,
**dadurch gekennzeichnet, dass**
die Vorsteuereinheit (9) die Wechselspannung (U_{VSCd}, U_{VSCq}) zunächst als zweidimensionale Zeigergrößen gemäß V_{VSCd} = U_{Nd} + R * I_{dsoll} - X * I_{qsoll} und V_{VSCq} = X * I_{dsoll} + R * I_{qsoll} berechnet, wobei V_{VSCd} der am Umrichter wechselspannungsseitig abfallende Spannungsanteil ist, der mit der Wechselspannung des Wechselspannungsnetzes in Phase ist und V_{VSCq} der wechselseitig des Umrichters abfallende Spannungsanteil ist, der zur Wechselspannung des Wechselspannungsnetzes um 90° phasenverschoben ist, R der Realteil der Impedanz eines zwischen Umrichter und Wechselspannungsnetz angeordnete Transformators, X der Imaginärteil der Impedanz des besagten Transformators, I_{dsoll} der Sollstrom in Phase mit V_{VSCd} und I_{qsoll} der Soll-Strom in Phase mit V_{VSCq} sind.

## Claims

1. Method for controlling a converter, connected to a DC voltage circuit and to phases of an AC voltage network, with controllable power semiconductors, in which setpoint values (I_{dsetpoint} I_{qsetpoint}) are prescribed for a control unit (3), actual values (U_{NS}, I) are sensed on the AC voltage side of the converter using phase measuring sensors and are supplied to the control unit (3), the control unit (3) compares the actual values (U_{NS}, I) or a variable derived from the actual values (U_{NS}, I) with at least one of the setpoint values (I_{dsetpoint}, I_{qsetpoint}), a controller (7) takes the comparison as a basis for producing a reference variable (U'_{VSCd}, U'_{VSCq}) and transmits it to an ignition unit, and the ignition unit actuates the power semiconductors such that the actual values (U_{NS}, I) or a variable derived from the actual values (U_{NS}, I) correspond or corresponds to at least one setpoint value (I_{dsetpoint}, I_{qsetpoint}), wherein a pilot unit (9) takes parameters (R,X) as a basis for calculating at least one step change reference variable and each step change reference variable (U_{VSCd}, U_{VSCq}) is transmitted to the ignition unit, and the power semiconductors are actuated if necessary on the basis of at least one of the step change reference variables,
**characterized in that**
the pilot unit (9) uses the impedance (R+jX) of a transformer (2) as a parameter for calculating the step change reference variables (U_{VSCd}, U_{VSCq}), the transformer (2) being connected between the converter and the AC voltage network and the pilot unit (9) interrupting the transmission of the reference variables (U'_{VSCd}, U'_{VSCq}) from the control unit (3) to the ignition unit when necessary and instead transmitting each step change reference variable (U_{VSCd}, U_{VSCq}) to the ignition unit.

2. Method according to Claim 1,
**characterized in that**
the setpoint values (I_{dsetpoint}, I_{qsetpoint}) are calculated by a conversion unit (5) on the basis of original setpoint values (Pₛₑₜₚₒᵢₙₜ, Qₛₑₜₚₒᵢₙₜ).

3. Method according to one of the preceding claims,
**characterized in that**
the pilot unit (9) determines the necessity on the basis of the change in the prescribed setpoint values (I_{dsetpoint}, I_{qsetpoint}).

4. Method according to one of the preceding claims,
**characterized in that**
the pilot unit (9) calculates a polyphase AC voltage (U_{VSCd}, U_{VSCq}) which is desired on the AC side of the converter as a step change reference variable.

5. Method according to Claim 4,
**characterized in that**
the pilot unit (9) calculates the AC voltage (U_{VSCd}, U_{VSCq}) first of all as two-dimensional phasor variables on the basis of U_{VSCd} = U_{Nd} + R * I_{dsetpoint} - X * I_{qsetpoint} and U_{VSCq} = X * I_{dsetpoint} + R * I_{qsetpoint}, where U_{VSCd} is the voltage component drop on the AC voltage side of the converter in phase with the AC voltage of the AC voltage network, and U_{VSCq} is the voltage component drop on the AC side of the converter with a 90° phase shift relative to the AC voltage of the AC voltage network, R is the real part of the impedance of a transformer arranged between converter and AC voltage network, X is the imaginary part of the impedance of said transformer, I_{dsetpoint} is the setpoint current in phase with U_{VSCd} and I_{qsetpoint} is the setpoint current in phase with U_{VSCq}.

## Revendications

1. Procédé de régulation d'un convertisseur relié à un circuit de tension continu et à des phases d'un réseau de tension alternatif et comprenant des semiconducteurs de puissance commandables, dans lequel on prescrit des valeurs (I_{dSoll}, I_{qSoll}) de consigne à une unité (3) de régulation, on relève des valeurs (U_{NS}, I) réelles du côté de la tension alternative du convertisseur par des capteurs de mesure de phase et on les envoie à l'unité (3) de régulation, l'unité (3) de régulation compare les valeurs (U_{NS}, I) réelles ou une grandeur dérivée des valeurs (U_{NS}, I) réelles à au moins l'une des valeurs (I_{dSoll}, I_{qSoll} ) de consigne, un régulateur (7) produit, en fonction de la comparaison, une grandeur (U'_{VSCd}, U'_{VSCq}) de conduite et la transmet à une unité d'amorçage et l'unité d'amorçage commande les semiconducteurs de puissance, de manière à ce que les valeurs (U_{NS}, I) réelles ou une grandeur dérivée des valeurs (U_{NS}, I) réelles correspondent à au moins l'une de valeurs (I_{dSoll}, I_{qSoll}) de consigne, un dispositif (9) de précommande calculant, sur la base de paramètres (R,X), au moins une grandeur de conduite à saut, et chaque grandeur (U_{VSCd}, U_{VSCq}) de conduite à saut étant transmise à l'unité d'amorçage, et la commande des semiconducteurs de puissance s'effectuant en cas de besoin, en fonction d'au moins l'une des grandeurs de conduite à saut,
**caractérisé en ce que** l'unité (9) de précommande utilise l'impédance (R+jX) d'un transformateur (2) comme paramètre pour le calcul des grandeurs (U_{VSCd}, U_{VSCq}) de conduite à saut, le transformateur (2) étant monté entre le convertisseur et le réseau de tension alternative et l'unité (9) de précommande interrompt en cas de besoin la transmission des grandeurs (U'_{VSCd}, U'_{VSCq}) de conduite de l'unité (3) de régulation à l'unité d'amorçage et, au lieu de cela, transmet chaque grandeur (U_{VSCd}, U_{VSCq}) de conduite à saut à l'unité d'amorçage.

2. Procédé suivant la revendication 1,
**caractérisé en ce que** les valeurs (I_{dSoll}, I_{qSoll}) de consigne sont calculées par une unité (5) de transformation par le calcul à partir des valeurs (P_{Soll}, Q_{Soll}) de consigne d'origine.

3. Procédé suivant l'une des revendications précédentes,
**caractérisé en ce que** l'unité (9) de précommande détermine en cas de besoin en fonction de la modification des valeurs (I_{dSoll}, I_{qSoll}) de consigne prescrites.

4. Procédé suivant l'une des revendications précédentes,
**caractérisé en ce que** l'unité (9) de précommande calcule, comme grandeur de conduite à saut, une tension (U_{VSCd}, U_{VSCq}) alternative à plusieurs phases, souhaitée du côté alternatif sur le convertisseur.

5. Procédé suivant la revendication 4,
**caractérisé en ce que** l'unité (9) de précommande calcule la tension (U_{VSCd}, U_{VSCq}) alternative, d'abord sous la forme de grandeurs vectorielles à deux dimensions, suivant V_{VSCd} = U_{Nd} + R * I_{dsoll} - X * I_{qsoll} et V_{VSCq} = X * I_{dsoll} + R * I_{qsoll}, V_{VSCd} étant la proportion de tension chutant de la tension alternative aux bornes du convertisseur et en phase avec la tension alternative du réseau de tension alternative et V_{VSCq} étant la proportion de tension chutant du côté alternatif du convertisseur, qui est déphasée de 90° par rapport à la tension alternative du réseau de tension alternative, R étant la partie réelle de l'impédance d'un transformateur interposé entre le convertisseur et le réseau de tension alternative, X étant la partie imaginaire de l'impédance dudit transformateur, I_{dsoll} étant le courant de consigne en phase avec V_{VSCd} et I_{qsoll} étant le courant de consigne en phase avec V_{VSCq}.
